**Europäisches Patentamt**

**European Patent Office**

**Office européen des brevets**

(19)

(11) Veröffentlichungsnummer : **0 142 633 B2**

# (12) NEUE EUROPÄISCHE PATENTSCHRIFT

(45) Veröffentlichungstag der neuen Patentschrift :
**14.10.92 Patentblatt 92/42**

(51) Int. Cl.⁵ : **G05D 13/62, B60K 41/08**

(21) Anmeldenummer : **84109967.4**

(22) Anmeldetag : **22.08.84**

(54) Einrichtung zur Ermittlung der Fahrbahnsteigung.

(30) Priorität : **26.09.83 DE 3334719**

(43) Veröffentlichungstag der Anmeldung :
**29.05.85 Patentblatt 85/22**

(45) Bekanntmachung des Hinweises auf die
Patenterteilung :
**04.11.87 Patentblatt 87/45**

(45) Bekanntmachung des Hinweises auf die
Entscheidung über den Einspruch :
**14.10.92 Patentblatt 92/42**

(84) Benannte Vertragsstaaten :
**DE FR GB IT SE**

(56) Entgegenhaltungen :
**DE-A- 3 101 056**
**DE-A- 3 246 201**

(56) Entgegenhaltungen :
**DE-A- 3 314 800**
**FR-A- 2 349 071**
**GB-A- 2 097 074**
**BUSSIEN, Automobiltechnisches Handbuch,**
**2.Band,1965,Technischer Verlag Herbert**
**Cram, Berlin, Seiten 2 bis 11**

(73) Patentinhaber : **WABCO Westinghouse**
**Fahrzeugbremsen GmbH**
**Am Lindener Hafen 21 Postfach 91 12 80**
**W-3000 Hannover 91 (DE)**

(72) Erfinder : **Der Erfinder hat auf seine Nennung**
**verzichtet**

(74) Vertreter : **Schrödter, Manfred**
**WABCO Westinghouse Fahrzeugbremsen**
**GmbH Am Lindener Hafen 21 Postfach 91 12**
**80**
**W-3000 Hannover 91 (DE)**

EP 0 142 633 B2

## Beschreibung

Die Erfindung bezieht sich auf eine Einrichtung zur Ermittlung der Fahrbahnsteigung, auf der sich ein von einer Antriebsmaschine angetriebenes Fahrzeug befindet, gemäß dem Oberbegriff des Patentanspruchs 1.

Die Ermittlung der Fahrbahnsteigung, auf der sich ein von einer Antriebsmaschine angetriebenes Fahrzeug befindet, ist z.B. dann von Bedeutung, wenn das Fahrzeug von einem Verbrennungsmotor angetrieben wird und mit einem Getriebe versehen ist, für dessen Steuerung entsprechend vorgegebener Auswahlkriterien Schaltsignale erzeugt werden sollen.

Weiterhin kann die Fahrbahnsteigung in diverse Antriebssteuer- und Bremsvorgänge eingehen.

Das Problem der Ermittlung der Fahrbahnsteigung, auf der sich ein angetriebenes Fahrzeug bewegt, ist bis heute für Fahrzeuge in Großserie nicht befriedigend gelöst worden.

Aus der FR-A-23 49 071 ist eine Steuerung für ein automatisches Getriebe bekannt, in welcher neben einer Vielzahl von anderen Einflußgrößen auch die Fahrbahnsteigung ermittelt und einer Elektronik zugeleitet wird. In der Elektronik werden passende Signale zur Umschaltung des Getriebes erzeugt. Die Fahrbahnsteigung wird dabei von einem Neigungsmesser sensiert, dessen genaue Konstruktion aber nicht offenbart ist.

Mit größerem Meßaufwand läßt sich die Fahrbahnsteigung selbstverständlich ermitteln. So kann man z.B. ein Pendel verwenden, daß sich zum Gravitationszentrum hin orientiert und bei dem man mit einem festgelegten Eichmaß den Ausschlag zu einer Fahrzeugachse mißt.

An Fahrzeugen treten jedoch diverse Störungen auf, die einen Ausschlag des Pendels hervorrufen können. Kurzzeitige Störungen die durch Fahrbahnunebenheiten bedingt sind, könnten noch relativ einfach durch entsprechende Dämpfungen und Tiefpässe eliminiert werden. Es treten jedoch, z.B. bei Bremsungen auch sehr langzeitige Störungen auf, die zudem noch eine Neigung des Fahrzeugaufbaues zur Folge haben können. Solche Störungen lassen sich nur mit großen Aufwand herausfiltern.

Eine zweite Schwierigkeit besteht darin, daß nur sehr kleine Pendelausschläge zu erwarten sind. 1 % Steigung entspricht ungefähr 0,57° Auslenkung. Um eine ausreichende Genauigkeit zu erzielen, müßte also ein sehr langes Pendel verwendet werden.

Die erwähnten Mittel und Einrichtungen zur Erfassung der Fahrbahnsteigung sind also schon für den einfachsten Fall einer sehr groben Steigungsermittlung sehr aufwendig.

Aus der DE-A 31 01 056 ist weiter ein Verfahren zur Ermittlung von Schaltsignalen für ein Kraftfahrzeug bekannt, bei dem unter anderem auch die Fahrbahnsteigung berücksichtigt wird. Zur Ermittlung der Fahrbahnsteigung wird dort vorgeschlagen, die Meßgrößen des Motordrehmomentes, der Fahrzeuggeschwindigkeit und der Fahrzeugbeschleunigung heranzuziehen, die mit Hilfe der bekannten Bewegungsgleichungen eine Bestimmung der Fahrbahnsteigung erlauben, wenn auch noch die Fahrzeugmasse berücksichtigt wird, Die konkrete Berechnungsmethode ist nicht angegeben, Die Fahrzeugmasse kann entweder über einen (relativ aufwendigen) besonderen Lastsensor gemessen werden, oder über einen (recht ungenauen) vom Fahrer betätigten Dreistellungsschalter eingegeben werden.

Der Erfindung liegt die <u>Aufgabe</u> zugrunde, eine Einrichtung der eingangs genannten Art zu schaffen, bei der mit einfachen, kostengünstigen Mitteln eine für eine Verwertung zu Steuerzwecken <u>ausreichend genaue Bestimmung der Fahrbahnsteigung</u> oder einer der Steigung entsprechenden Steigungsgröße möglich ist.

Diese Aufgabe wird von der im Patentanspruch 1 angegebenen Erfindung gelöst. Vorteilhafte Ausführungsbeispiele und Weiterbildungen der Erfindung sind in den Unteransprüchen angegeben.

Durch die erfindungsgemäße Einrichtung ergibt sich in vorteilhafter Weise eine einfache Möglichkeit, die <u>Fahrbahnsteigung während der Fahrt des Fahrzeugs mit üblichen Sensoren oder</u> Gebern für direkt meßbare Fahrzeugparameter wie Motordrehzahl, Raddrehzahl, Gaspedal-Stellung u.a., <u>zu ermitteln</u>.

Die Erfindung geht von der folgenden Erkenntnis aus. Zu jedem beliebigen Zeitpunkt setzt sich das fahrzeugantreibende momentane Antriebsmoment $M_A$ (Motormoment) zusammen aus einem stationären Antriebsmoment $M_{stat}$, das zur Weiterfahrt des Fahrzeugs ohne Beschleunigung oder Verzögerung erforderlich ist, und einem eine Beschleunigung oder Verzögerung des Fahrzeugs bewirkenden Beschleunigungsmoment $M_b$ nach der Beziehung

$$M_A = M_{stat} + M_b.$$

Wie in der EPA 0126201 vorgeschlagen, kann das stationäre Antriebsmoment $M_{stat}$ über die Beziehung

$$M_{stat} = M_A - G \cdot f(s)$$

relativ Renau ermittelt werden, ohne daß das Ergebnis verfälschende Annahmen getroffen werden müssen.

Die Gewichtsgröße G des Fahrzeugs wird nach einem in der EP-A 0111 636 vorgeschlagenen Verfahren bestimmt,

Das stationäre Antriebsmoment $M_{stat}$ kann als die Summe der Fahrwiderstände bei geschwindigkeitskonstanter Fahrt aufgefaßt werden. Diese Fahrwiderstände sind Im wesentlichen die Rollreibung, die Luftreibung und der Steigungswiderstand.

Damit läßt sich die Fahrbahnsteigung p in vereinfachter und das verwendete Prinzip verdeutlichender Form angeben mit

$$p \triangleq \frac{M_{stat} \cdot i}{G \cdot r} - \frac{W_L + W_R}{G \cdot r}$$

Wie man sieht, ist die Steigung im wesentlichen dem stationären Moment $M_{stat}$ proportional, wobei die auftretenden Widerstandsmomente bzw - Kräfte $W_L$ und $W_R$ abgezogen werden.

Das Luftwiderstandmoment WL ist nach der Beziehung

$$W_L = C_W \cdot F \cdot \dot{s}^2$$

quadratisch von der Fahrzeuggeschwindigkeit abhängig.

Das Rollreibungsmoment $W_R$ ist das Produkt aus Reibungsbeiwert $f_R$ und Gewicht G nach der Beziehung

$$W_R = f_R \cdot G$$

Die Größen $C_W$, F und $f_R$ sind annähernd konstante Größen, die für ein bestimmtes Fahrzeug relativ genau abgeschätzt oder ermittelt werden können.

Im einzelnen bedeuten in den obenstehenden Gleichungen

$M_{stat}$ = stationäres Antriebsmoment

$M_A$ = momentanes Antriebsmoment

$M_b$ = Beschleunigungsmoment

G = Gewicht des Fahrzeugs

$\ddot{s}$ = Beschleunigung des Fahrzeugs

$\dot{s}$ = Geschwindigkeit des Fahrzeugs

i = Übersetzung im Antriebsstrang

p = Fahrbahnsteigung

$W_L$ = Luftwiderstandsmoment

$W_R$ = Rollreibungsmoment und Moment der mechanischen Reibung im Antriebsstrang

$f_R$ = Reibungsbeiwert

$C_W$ = Luftwiderstandsbeiwert

F = Frontalfläche des Fahrzeugs

q = Luftdichte

r = Abstand Antriebsachse - Fahrbahn

Des Luftwiderstandsmonnt WL kann innerhalb der einzelnen Getriebegänge in guter Näherung als konstant angenommen werden, da in einem bestimmten Gang, aufgrund des begrenzten Motordrehzahlbereiches, nur ein kleiner Geschwindigkeitsbereich gefahren werden kann. Dieses ist insbesondere bei Nutzfahrzeugen mit eng gestuften Getrieben der Fall.

Anstelle der Steigung p kann auch eine steigungsproponionale Rechengröße, wie z. B. G. p ermittelt werden, wodurch der Rechenaufwand für die Quotientenbildung entfällt.

Um die Straßensteigung ständig, also auch bei stehendem Fahrzeug zur Verfügung zu haben, kann der Steigungswert einem Speicher zugeleitet werden, der den jeweils zuletzt ermittelten Wart speichert. Beim darauffolgenden Fahrzeugstart kann die jeweilige Straßensteigung dann bei der Steuerung des Anfahrvorganges berücksichtigt werden.

In einer weiteren Ausgestaltung der Erfindung kann auch die Größe des Motor- oder Betriebsbramsmomentes $W_B$ in die oben genannte Gleichung eingeführt werden, um einen Steigungswert auch während eines Bremsvorganges zur Verfügung zu haben. Das Betriebsbremsmoment wird durch die reguläre Betriebsbremse oder durch einen Retarder erzeugt. Damit ergibt sich:

$$p = \frac{M_{stat} \cdot i}{G \cdot r} - \frac{W_L + W_R + W_B}{G \cdot r}$$

Die Erfindung wird im Folgenden anhand eines Ausführungsbeispiels, das in einer Zeichnung dargestellt ist, näher erläutert.

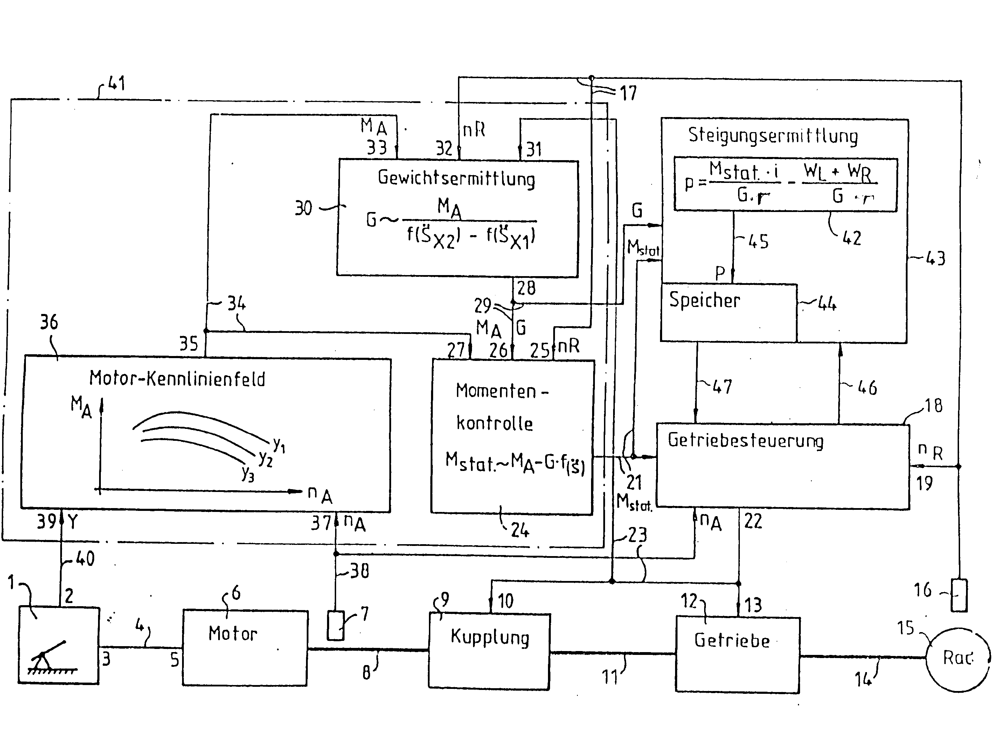

Die Zeichnung zeigt in vereinfachter Darstellung die wesentlichen Elemente eines von einer Antriebsmaschine angetriebenen Fahrzeugs. Als Antriebsmaschine dient ein Verbrennungsmotor 6, dessen Kraftstoffzufuhr mittels eines Gebers 1 steuerbar ist. Über eine Welle 8 ist der Motor 6 mit einer Kupplung 9 verbunden, die ihrerseits über eine Welle 11 mit einem Getriebe 12 verbunden ist.

Das Getriebe 12 dient zum Antrieb einer Achse 14, die ihrerseits die angetriebenen Fahrzeugräder des Fahrzeugs antreibt. Von den angetriebenen Rädern des Fahrzeugs ist der Einfachheit halber nur das Rad 15 dargestellt.

Der Geber 1 für die Steuerung der Kraftstoffzufuhr des Motors 6 weist einen Signalausgang 3 auf, der über eine Signalleitung 4 mit einem Signaleingang 5 des Motors 6 verbunden ist. Der Geber 1 ist ferner mit einer Einrichtung versehen, die die Stellung des Gebers 1 als Signalgröße y darstellt. Diese Signalgröße y ist an einem weiteren Signalausgang 2 des Gebers 1 abrufbar. Im einfachsten Fall enthält der Geber 1 als Steuerglied für die Kraftstoffzufuhr des Motors 6 ein übliches, mechanisch arbeitendes Gaspedal. Der Geber 1 kann jedoch auch - wie im dargestellten Ausführungsbeispiel - als elektrischer oder elektronischer Geber ausgebildet sein, wobei der Motor 6 entsprechend mittels eines Steuersignals steuerbar ist.

Die zwischen der antriebsseitigen Welle 8 und der abtriebsseitigen Welle 11 angeordnete Kupplung 9 ist mittels eines Steuersignals betätigbar, das einem Signaleingang 10 der Kupplung 9 zuführbar ist.

Das Getriebe 12 ist ebenfalls elektrisch steuerbar, wobei ein Signaleingang 13 des Getriebes 12 zum Empfang entsprechender Steursignale zum Einlegen des jeweils gewünschten oder erforderlichen Ganges dienen. Sowohl die Kupplung 9 als auch das Getriebe 12 können im einfachsten Fall rein mechanisch betätigt werden. In diesem Fall stellen die Signaleingänge 10 und 13 symbolhaft die Verbindung von Kupplungs-Betätigungsmechanismen und Getriebe-Betätigungsmechanismen mit den entsprechenden Betätigungseinrichtungen für die Kupplung 9 und das Getriebe 12 dar.

In einer Momenten-Kontrolleinrichtung 24 wird ein jeweiliges stationäres Antriebsmoment $M_{stat}$ dadurch bestimmt, daß die Differenz zwischen dem tatsächlichen vom Motor 6 aufgebrachten jeweiligen momentanen Antriebsmoment $M_A$ des Fahrzeugs und einer solchen Bechengröße bestimmt wird, die sich als das Produkt aus dem Gewicht des Fahrzeugs und dem Rechenwert der momentanen Beschleunigung des Fahrzeugs ergibt. Das stationäre Antriebsmoment $M_{stat}$ ist das Moment, welches zum beschleunigungslosen bzw. geschwindigkeitskonstanter Antrieb des Fahrzeugs erforderlich wäre.

Um die erwähnte Differenz berechnen zu können werden der Momenten-Kontrolleinrichtung 24 über einen Signaleingang 27 das transformierte momentane Antriebsmoment $M_A$ des Motors 6, über einen Signaleingang 26 das Gewicht G des Fahrzeugs und über einen Signaleingang 25 die Drehzahl $n_R$ des angetriebenen Rades 15 zugeführt.

Der Signaleingang 27 der Momenten-Kontrolleinrichtung 24 ist über eine Leitung 34 an den Signalausgang 35 eines Motor-Kennlinienfeld-Speichers 36 angeschlossen, der an dem erwähnten Signalausgang 35 ein dem momentanen Antriebsmoment des Motors 6 entsprechendes Signal zur Verfügung stellt.

Der Signaleingang 26 der Momenten-Kontrolleinrichtung 24 ist über eine Signalleitung 28 an eine Gewichtsermittlung 30 zur Ermittlung des Gewichts des Fahrzeugs angeschlossen. An einem Signalausgang 29 der Gewichtsermittlung 30 steht ein dem Gewicht des Fahrzeugs entsprechendes Signal zur Verfügung.

Der Signaleingang 25 der Momenten-Kontrolleinrichtung 24 schließlich ist über eine Signalleitung 17 mit einem Drehzahlgeber 16 zur Erfassung der Rad-Drehzahl $n_R$ verbunden.

In der Momenten-Kontrolleinrichtung 24 wird durch Differenzierung aus dem zeitlichen Verlauf der Drehzahl $n_R$ des Rades 15 die Beschleunigungsgrößes des Fahrzeugs berechnet.

Das jeweilige momentane Antriebsmoment $M_A$ des Motors 6 wird aus einem Motor-Kennlinienfeld 36 ermittelt, welches die Abhängigkeit der folgenden Größen voneinander enthält. Momentanes Antriebsmoment $M_A$ des Motors 6, Drehzahl $n_A$ des Motors 6 und Stellung y des Gebers (Gaspedal) 1. Im dargestellten Ausführungsbeispiel enthält der Speicher 36 für verschiedene Werte ($y_1$, $y_2$, $y_3$) der Stellung y des Gebers 1 je eine Kennlinie für die Abhängigkeit des momentanen Antriebsmomentes $M_A$ von der Drehzahl $n_A$.

Unter einem Motor-Kennlinienfeld sind auch solche Kennlinienfelder zu verstehen, die den Betriebszustand des Motors indirekt beschreiben, wie beispielsweise ein Kennlinienfeld, das die Abhängigkeit von Antriebsmoment $M_A$, Drehzahl $n_A$ und der Einspritzzeit enthält.

Weiterhin sind unter "Momenten" auch Antriebsgrößen allgemein zu verstehen, also zum Beispiel auch Leistungsgrößen oder solche vergleichbaren Größen, die die Antriebsmomente lediglich als eine von mehreren Rechengrößen enthalten.

Die Stellung y des Gebers 1 wird einem Signaleingang 39 des Speichers 36 über eine Signalleitung 40 zugeführt, die ihrerseits an den Signalausgang 2 des Gebers 1 angeschlossen ist. Die Drehzahl $n_A$ des Motors 6 wird mittels eines die Welle 8 abtastenden Sensors 7 ermittelt und über eine Signalleitung 38 einem Signaleingang 37 des Speichers 36 zugeführt. Ler Kennlinienfeld-Speicher 36 ist so ausgebildet, daß er für jedes Wertepaar $y/n_A$ das momentane Antriebsmoment $M_A$ an seinem Signalausgang 35 zur Verfügung stellt. Das Antriebsmoment $M_A$ kann mit geeigneten Sensoren auch direkt gemessen werden.

Die Drehzahl $n_A$ des Motors 6 kann auch aus der Rad-Drehzahl $n_R$ des Rades 15 berechnet werden, wenn das jeweilige Übersetzungsverhältnis des Getriebes 12 berücksichtigt wird.

In der Gewichtsermittlung 30 zur Ermittlung des Gewichtes des Fahrzeugs wird das Verhältnis zwischen dem momentanen Antriebsmoment $M_A$ des Motors 6 und einer Differenz zweier Rechengrößen gebildet, wobei die erwähnten Bechengrößen jeweils eine der Baschleunigung des Fahrzeugs entsprechende Beschleunigungsgröße enthalten. Diese beiden Beschleunigungsgrößen $\ddot{s}_{x2}$ und $\ddot{s}_{x1}$ werden zu verschiedenen Zeiten ermittelt, wobei die eine Beschleunigungsgröße vorzugsweise zu einem Zeitpunkt ermittelt wird, in dem sich das Fahrzeug in einem antriebslosen Zustand, z. B. in einer Schaltpause befindet. In diesem antriebslosen Zustand wird das Fahrzeug nicht wesentlich beschleunigt oder verzögert.

Um die erwähnte Rechenoperation durchführen zu können, wird der Gewichtsermittlung 30 über die Signalleitung 34 und einen Signaleingang 33 das momentane Antriebsmoment $M_A$ des Motors 6 zugeführt. Da zur Bildung der Beschleunigungsgrößen $\ddot{s}_{x2}$ und $\ddot{s}_{x1}$ erforderliche zeitliche Verlauf der Drehzahl $n_R$ des angetriebenen Rades 15 wird über die Signalleitung 17 einem Signaleingang 52 der Gewichtsermittlung 30 zugeführt. Über die Signalleitungen 23 schließlich wird einem Signaleingang 31 der Gewichtsermittlung 30 der Zeitpunkt mitgeteilt, zu dem die Kupplung 9 geöffnet ist. Damit kann zwischen solchen Zeiten, in denen das Fahrzeug dem Antrieb durch den Motor 6 unterliegt, und solchen Zeiten, in denen das Fahrzeug nicht dem Antrieb des Motors 6 unterliegt, unterschieden werden. Zu diesen unterschiedlichen Zeiten werden auch die Beschleunigungsgrößen $\ddot{s}_{x2}$ und $\ddot{s}_{x1}$ gemessen bzw. bestimmt.

Die allgemeine Formel zur Ermittlung des Fahrzeugsgewichtes G lautet:

$$G = r \frac{M_{A1} - M_{A2}}{f(\ddot{s}_{x1}) - f(\ddot{s}_{x2})}$$

Werte mit Index 1 sind zum Zeitpunkt 1 und Werte mit Index 2 sind zum Zeitpunkt 2 ermittelt.

Neben dem oben beschriebenen Sonderfall $M_{A2} = 0$, der für die Schaltpause gilt, kann auch der Sonderfall $f(\ddot{s}_{x2}) = 0$ ausgewertet werden. Dieser gilt für unbeschleunigte Fahrt.

Die obige Gleichung kann natürlich auch allgemein, ohne die Sonderfälle abzuwarten, ausgewertet werden. Dabei ist immer darauf zu achten, daß die beiden Meßpunkte nicht zu weit auseinander liegen. Um jedoch eine ausreichende Genauigkeit für die Gewichtsgröße zu erhalten, sollte die Differenz der Antriebsmomente $M_{A1}$ und $M_{A2}$ möglichst Groß gewählt werden.

Die Gewichtsermittlung 30 kann auch so ausgebildet sein, daß verschiedene ermittelte Gewichtsgrößen G zur Bildung eines Mittelwertes für die Gewichtsgrößen verwendet werden und daß der so ermittelte Mittelwert der Gewichtsgrößen eine vorbestimmte Änderung nicht überschreitet.

Um sicherzustellen, daß auch dann, wenn in der Gewichtsermittlung 30, z.B. wegen zu kurzer Fahrzeit noch kein ausreichend genauer Wert für die Gewichtsgröße G vorliegt, in der Momenten-Kontrolleinrichtung 24 ein brauchbarer Wert für das stationäre Antriebsmoment $M_{stat}$ bestimmt werden kann, ist es vorteilhaft, statt der von der Gewichtsermittlung 30 ermittelten Gewichtsgrößen G zunächst eine mittlere Gewichtsgröße $G_o$ zu verwenden, die z.B. einem halbbeladenen Fahrzeug entspricht.

Für eine sichere Bestimmung und Berechnung der Gewichtsgröße G eignet sich in vorteilhafter Weise ein in der Gewichtsarmittlung 30 vorgesehener Mikrocomputer, mit dem insbesondere auch die zeitabhängigen Rechenvorgänge bezüglich der Beschleunigungsgrößen auf einfache Weise realisiert werden können.

Die aus dem Motor-Kennlinienfeld 36, der Gewichtsermittlung 30 und der Momenten-Kontrolle 24 bestehende Baugruppe ist in der Zeichnung als Auswerteeinrichtung 41 gekennzeichnet.

Zur Steuerung des Getriebes 12 ist eine schematisch dargestellte Getriebesteuerung 19 vorgesehen. Der Getriebesteuerung werden die Werte der Raddrehzahl $n_R$, des stationären Momentes $M_{stat}$ und der Motordrehzahl $n_A$ zugeführt.

Im einfachsten Fall arbeitet diese Getriebesteuerung 18 so, daß das Getriebe 12 in Abhängigkeit von dar Geschwindigkeit des Fehrzeugs und somit in Abhängigkeit von der Drehzahl $n_R$ der angetriebenen Räder automatisch geschaltet wird. Zur Erfassung der Drehzahl $n_R$ des angetriebenen Rades 15 dient dar Sensor 16, dessen Drehzahl-Signal über die Signalleitung 17 einem Signaleingang 19 der Getriebesteuerung 18 zugeführt ist. Über einen Signalausgang 22 und entsprechende Signalleitungen 23 ist die Getriebesteuerung 18 mit den Signaleingängen 13 des Getriebes 12 und dem Signaleingang 10 der Kupplung 9 verbunden.

Wenn mittels der Getriebesteuerung 18 in Abhängigkeit von der Geschwindigkeit des Fahrzaugs und unter Berücksichtigung vorgegebener Auswahlkriterien ein neuer Gang festgelegt wird, wird die Kupplung 9 über ihren Signaleingang 10 betätigt und anschließend bei getrennter Kupplung das Getriebe 12 über seinen Signaleingang 13 von der Getriebesteurung 18 umgeschaltet. Danach wird dann die Kupplung 9 wieder geschlossen. Die Steuerung bzw. Betätigung der Kupplung 9 und des Getriebes 12 können machanisch über Servomotoren der Getriebesteuerung 18 erfolgen.

Zu den vorstehend erwähnten Auswahlkriterien, nach denen in der Getriebesteuerung 19 jeweils ein neuer Gang festgelegt wird, gehört eine Überprüfung, ob der neue Betriebspunkt nach dem Einlegen des ausgewählten neuen Ganges in der Nähe des verbrauchsgünstigen Betriebsbereiches liegen würde. Um die Darstellung zu vereinfachen, ist eine solche Einrichtung in der Zeichnung nicht dargestellt, sie wäre aber Bestandteil der Getriebesteuerung 18.

In die Ermittlung der günstigsten Umschaltpunkte geht auch eine Information über die jeweilig vorliegende Fahrbahnsteigung ein, die von einer Steigungsermittlung 43 über eine Leitung 47 an die Getriebesteuerung 19 übertragen wird.

In der Steigungsermittlung 43 wird die jeweils vorliegende Fahrbahnsteigung p nach der obenstehenden Formel während der Fahrt auf einfache Art aus den für die Getriebesteuerung ohnehin erforderlichen Informationen in einer Differenzbildungseinrichtung 42 ermittelt.

Eine Information über das Gewicht G des Fahrzeugs wird der Differenzbildungseinrichtung 42, die ein Teil der Steigungsermittlung 43 ist, über eine Leitung 28 zugeführt.

Eine Information über das momentane stationäre Antriebsmoment $M_{stat}$ wird der Differenzbildungseinrichtung 42 über eine Leitung 21 zugeführt.

Eine Information über die jeweilige Getriebeübersetzung i erhält die Differenzbildungseinrichtung 42 von der Getriebesteuerung 18 über eine Leitung 46.

Gegebenenfalls werden der Differenzbildungseinrichtung 42 auch Informationen über das Betriebsbremsmoment $W_B$ über einen entsprechenden Geber übermittelt (nicht dargestellt). Als Geber kann z.B. eine Druckmeßdose für den Bremsdruck verwendet werden.

Die Steigungsermittlung 43 weist intern noch (nicht dargestellte) Einrichtungen zur Bestimmung der Luftreibung $W_L$ und der Rollreibung $W_R$ auf. Im einfachsten Fall ist die Rollreibung $W_R$ ein konstant vorgegebener Wert, der für das jeweilige Fahrzeug empirisch ermittelt wurde. Die Luftreibung $W_L$ wird im einfachsten Fall vorher durch ebenfalls konstant vorgegebene Werte beschrieben, die für die einzelnen Gänge und für das jeweilige Fahrzeug empirisch ermittelt wurden.

Die Differenzbildungseinrichtung 42 ermittelt, wie bereits oben angeführt, aus den eingegebenen Werten die Fahrbahnsteigung nach der Formel

$$p \triangleq \frac{M_{stat} \cdot i}{G \cdot r} - \frac{W_L + W_R}{G \cdot r}$$

in einem unbestimmten Rhythmus, der auf Abfrage oder durch vorliegende neue Eingabewerte gesteuert wird.

Die so gewonnene Information über die jeweilige Fahrbahnsteigung wird über eine Leitung 45 an einen Speicher 44 gegeben, der den aktuellen letzten Steigungswert p für den Abruf der Getriebesteuerung 18 bereithält. Diese Bereithaltung des Steigungswertes p ist vor allem dann vorteilhaft, wenn das Fahrzeug zum Stehen kommt und der anschließende Anfahrvorgang gesteuwert werden soll.

Um eventuelle Feher zu unterdrücken, kann die Steigungsermittlung 43 auch Mittel zur Dämpfung der ermittelten Steigungswertes p enthalten. Diese wirken so, daß extreme Steigungsränderungen, die die üblichen auf Straßen auftretenden Steigungsänderungen übertreffen, ignoriert werden, selbst wenn sie real auftreten sollten.

## Patentansprüche

1. Einrichtung zur Ermittlung der Fahrbahnsteigung p oder einer der Steigung proportionalen Steigungsgröße, auf der sich ein von einer Antriebsmaschine mit einem momentanen Antriebsmoment $M_A$ angetriebenes Fahrzeug mit einem Gewicht G befindet,
   gekennzeichnet durch folgende Merkmale:
   a) Es ist eine Einrichtung zur Gewichtsermittlung (30) vorgesehen, die das Fahrzeuggewicht G nach der Formel

$$G = \frac{M_{A1} - M_{A2}}{f(\ddot{s}_{x1}) - f(\ddot{s}_{x2})}$$

berechnet, wobei $\ddot{s}$ die Beschleunigung des Fahrzeugs bedeutet, und Werte mit Index x1 zum Zeitpunkt 1 und Werte mit Index x2 zum Zeitpunkt 2 ermittelt sind, und wobei die beiden Zeitpunkte so gewählt sind, daß sie ausreichend dicht zusammenliegen, die zugehörigen Momente und Beschleunigungen aber verschieden sind.
   b) es ist eine Auswerteeinrichtung (41) zur Ermittlung eines stationären Antriebsmomentes $M_{stat}$ oder

einer hierzu proportionalen Rechengröße der Antriebsmaschine vorgesehen, das für eine geschwindigkeitskonstante Fahrt erforderlich ist, nach der Formel

$$M_{stat} = M_A - G \cdot f\ (\ddot{s})$$

c) es ist eine Einrichtung zur Steigungsermittlung (43) mit einer Differenzbildungseinrichtung (42) vorgesehen, in welcher die Fahrbahnsteigung p ermittelt wird als Differenz aus dem stationären Antriebsmoment $M_{stat}$ und den am Fahrzeug auftretenden Reibungswiderstandsgrößen, nach der Formel:

$$p = \frac{M_{stat} \cdot i}{G \cdot r} - \frac{W_L + W_R}{G \cdot r}$$

wobei i die Übersetzung im Antriebsstrang, $W_L$ das Luftwiderstandsmoment, $W_R$ das Rollreibungsmoment des Fahrzeugs, und r der Abstand Antriebsachse-Fahrbahn bedeutet.

2. Einrichtung nach Anspruch 1 <u>dadurch gekennzeichnet</u>, daß für des Luftwiderstands moment $W_L$ innerhalb der einzelnen Getriebeübersetzungsstufen konstante Werte vorgegeben werden.

3. Einrichtung nach Anspruch 1 <u>dadurch gekennzeichnet</u>, daß zu den Reibungswiderstandsgrößen $W_L$ und $W_R$ auch die Motor- oder Betriebsbremsmomente oder -Größen addiert werden.

4. Einrichtung nach mindestens einem der Ansprüche 1 bis 3, <u>dadurch gekennzeichnet</u>, daß der jeweils zuletzt ermittelte Steigungswert p in einem Speicher (44) abrufbereit bereitgestellt wird.

5. Einrichtung nach mindestens einem der Ansprüche bis 4, <u>dadurch gekennzeichnet</u>, daß eine Änderung des Steigungswertes p über der Zeit nur bis zu einer Größe zugelassen wird, die den Steigungsänderungen auf üblichen Straßen entspricht.

6. Einrichtung nach mindestens einem der Ansprüche 1 bis 5, <u>dadurch gekennzeichnet</u>, daß die Ermittlung des Steigungswertes p wiederholt vorgenommen wird.

7. Einrichtung nach den Ansprüchen 1 bis 6, <u>dadurch gekennzeichnet</u>, daß zur Ausführung der Berechnungen mindestens ein Mikrocomputer vorgesehen ist.

**Claims**

1. Device for ascertaining the road gradient <u>p</u> or a gradient magnitude proportional to the gradient, on which a vehicle with a weight G driven by a drive motor with an instantaneous driving torque $M_A$ is located, <u>characterised by the following features</u> :

   a) there is provided a device (30) for ascertaining weight which calculates the vehicle weight G in accordance with the formula

$$G = \frac{M_{A1} - M_{A2}}{f(\ddot{s}_{x1}) - f(\ddot{s}_{x2})}$$

   wherein $\ddot{s}$ represents the acceleration of the vehicle and values with the index x1 are calculated at time 1 whilst values with the index x2 are calculated at time 2, the two times being so selected that they are sufficiently close together but that the associated torques and accelerations are different;

   b) there is provided an evaluation device (41) for ascertaining a steady driving torque $M_{stat}$ of the drive motor, or an operand proportional thereto, which is necessary for driving at a constant speed, in accordance with the formula

7

$$M_{stat} = M_A - G \cdot f(\ddot{s})$$

c) there is provided a device (43) for ascertaining the gradient with a subtractor (42), in which the road gradient $\underline{p}$ is ascertained as the difference between the steady driving torque $M_{stat}$ and the friction resistance magnitudes occurring on the vehicle, in accordance with the formula :

$$p = \frac{M_{stat} \cdot i}{G \cdot r} - \frac{W_L + W_R}{G \cdot r}$$

wherein $\underline{i}$ is the gear ratio in the drive line, $W_L$ is the air resistance torque, $W_R$ is the rolling friction torque of the vehicle, and $\underline{r}$ is the distance between the drive axle and the road.

2. Device according to claim 1, <u>characterised in that</u> for the air resistance torque $W_L$ constant values are predetermined within the individual gear ratio steps.

3. Device according to claim 1, <u>characterised in that</u> there are added to the friction resistance magnitudes $W_L$ and $W_R$ also the motor or service brake torques or magnitudes.

4. Device according to at least one of claims 1 to 3, <u>characterised in that</u> the last ascertained value $\underline{p}$ of the gradient is placed in a store (44) in readiness to be called.

5. Device according to at least one of claims 1 to 4, <u>characterised in that</u> a change of the gradient value $\underline{p}$ is permitted over the period only up to a magnitude that corresponds to the changes in gradient on normal roads.

6. Device according to at least one of claims 1 to 5, <u>characterised in that</u> the gradient value $\underline{p}$ is repeatedly ascertained.

7. Device according to claims 1 to 6, <u>characterised in that</u> at least one microcomputer is provided for carrying out the calculations.

**Revendications**

1. Dispositif de détermination de la pente p de la chaussée ou d'une grandeur proportionnelle à la pente sur laquelle se trouve un véhicule de poids G propulsé par le couple moteur instantané $M_A$ délivré par un moteur, ledit dispositif étant caractérisé par :
   a) un dispositif (30) de détermination du poids qui calcule le poids G du véhicule selon la formule

$$G = \frac{M_{A1} - M_{A2}}{f(\ddot{s}_{x1}) - f(\ddot{s}_{x2})}$$

$\ddot{s}$ étant l'accélération du véhicule, les valeurs d'indice 1 étant déterminées à l'instant 1 et les valeurs d'indice 2 à l'instant 2, et les deux instants étant choisis de manière qu'ils soient suffisamment rapprochés mais que les couples et accélérations correspondants soient différents ;
   b) un dispositif d'interprétation (41) pour la détermination d'un couple moteur stationnaire $M_{stat}$ ou d'une grandeur calculée proportionnelle du moteur, nécessaire pour une marche à vitesse constante, selon la formule :

$$M_{stat} = M_A - G \cdot f(\ddot{s})$$

8

c) un dispositif (43) de détermination de la pente, avec un dispositif différenciateur (42), dans lequel la pente p de la chaussée est déterminée sous forme de différence entre le couple moteur stationnaire $M_{stat}$ et les résistances de frottement du véhicule, selon la formule :

$$p = \frac{M_{stat} \cdot i}{G.r} - \frac{W_L + W_R}{G.r}$$

i étant le rapport de démultiplication dans la chaîne cinématique,
$W_L$ le couple de résistance aérodynamique,
$W_R$ le couple de frottement de roulement du véhicule, et
r la distance axe d'entraînement-chaussée.

2. Dispositif selon la revendication 1, caractérisé en ce que des valeurs constantes sont fixées pour le couple de résistance aérodynamique $W_L$ sur les divers rapports de la boîte de vitesses.

3. Dispositif selon la revendication 1, caractérisé en ce que les couples ou grandeurs de freinage moteur ou principal sont additionnés aux grandeurs de résistance de frottement $W_L$ et $W_R$.

4. Dispositif selon au moins l'une des revendications 1 à 3, caractérisé en ce qu'une mémoire (44) contient la dernière valeur déterminée de la pente p, prête pour un appel.

5. Dispositif selon au moins l'une des revendications 1 à 4, caractérisé en ce qu'une variation dans le temps de la valeur p de la pente n'est admise que jusqu'à une grandeur correspondant aux variations de pente sur les routes habituelles.

6. Dispositif selon au moins l'une des revendications 1 à 5, caractérisé en ce que la détermination de la valeur p de la pente est répétée.

7. Dispositif selon les revendications 1 à 6, caractérisé par un micro-ordinateur au moins pour l'exécution des calculs.

10